(19) Europäisches Patentamt
European Patent Office
Office européen des brevets

(11) **EP 1 303 738 B1**

(12) **EUROPÄISCHE PATENTSCHRIFT**

(45) Veröffentlichungstag und Bekanntmachung des Hinweises auf die Patenterteilung:
**16.01.2008** **Patentblatt 2008/03**

(21) Anmeldenummer: **01949472.3**

(22) Anmeldetag: **06.07.2001**

(51) Int Cl.:
*G01C 15/00* (2006.01)      *G01P 3/68* (2006.01)
*H01S 3/06* (2006.01)      *G01C 1/02* (2006.01)
*G01S 7/481* (2006.01)

(86) Internationale Anmeldenummer:
**PCT/EP2001/007791**

(87) Internationale Veröffentlichungsnummer:
**WO 2002/008692 (31.01.2002 Gazette 2002/05)**

(54) **Vorrichtung zur optischen Distanz- oder Geschwindigkeitsmessung**

Device for optically measuring distance or speed

Dispositif de mesure optique de distance ou de vitesse

(84) Benannte Vertragsstaaten:
**CH DE FR GB LI SE**

(30) Priorität: **24.07.2000 EP 00115838**

(43) Veröffentlichungstag der Anmeldung:
**23.04.2003 Patentblatt 2003/17**

(73) Patentinhaber: **Leica Geosystems AG**
**9435 Heerbrugg (CH)**

(72) Erfinder: **EHBETS, Hartmut**
**CH-9442 Berneck (CH)**

(74) Vertreter: **Kaminski, Susanne et al**
**Büchel, Kaminski & Partner**
**Patentanwälte Est.**
**Austrasse 79**
**9490 Vaduz (LI)**

(56) Entgegenhaltungen:
**EP-A- 0 987 564**      **US-A- 5 521 696**
**US-A- 6 048 105**

- **PATENT ABSTRACTS OF JAPAN vol. 016, no. 096 (P-1322), 10. März 1992 (1992-03-10) & JP 03 276004 A (OMRON CORP), 6. Dezember 1991 (1991-12-06)**
- **GORT A F: "A fully integrated, microprocessor-controlled total station" HEWLETT-PACKARD JOURNAL, SEPT. 1980, USA, Bd. 31, Nr. 9, Seiten 3-11, XP002155352 ISSN: 0018-1153**

**Beschreibung**

Die vorliegende Erfindung bezieht sich auf eine Vorrichtung zur optischen Distanz- oder Geschwindigkeitsmessung bzw. für eine Nivelliervorrichtung nach dem Oberbegriff des Anspruches 1.

Bei Geräten für die Entfernungs- und/oder Geschwindigkeitsmessung ist die Reichweite - bei ansonsten gleichen technischen Eigenschaften - um so grösser, je höher die Pulsspitzenleistung der ausgesendeten Laserimpulse ist. Anderseits lässt sich die Pulsspitzenleistung aus sicherheitstechnischen Gründen nicht beliebig vergrössern. Nun ist es so, dass die Lasersicherheitsvorschriften für Wellenlängen >1050 nm, mithin in einem unsichtbaren Wellenlängenbereich, höhere Pulsspitzenleistungen als für die sichtbare Strahlung zulassen.

Damit sind zwar höhere Reichweiten erzielbar, doch hat auch ein sichtbares Laserbündel eine Reihe von Vorteilen, wie

- Visualisation des Messbündels auf dem Objekt;
- Möglichkeit der Überprüfung und gegebenenfalls Justierung der Lage der Achse des Laserbündels relativ zur Fernrohrachse;
- Herabsetzung der Gefährdung des Auges durch die Abwendreaktion einer getroffenen Person, einschliesslich des Lidschlussreflexes.

Der Erfindung liegt die Aufgabe zugrunde, eine Vorrichtung der genannten Art so auszubilden, dass alle genannten Vorteile erzielbar sind. Diese Aufgabe wird durch die kennzeichnenden Merkmale des Anspruches 1 gelöst.

Wenn dabei davon die Rede ist, dass die wenigstens zwei unterschiedlichen Wellenlängen der Strahlung nach Empfang ausgewertet werden, so muss dies nicht bedeuten, dass beide zu einem Messergebnis führen, sondern es kann der sichtbare Strahl beispielsweise so ausgewertet werden, dass er zum Markieren des Objektes bzw. des Zielpunktes herangezogen wird, wogegen die andere Wellenlänge, z. B. im Infrarot-Bereich, für eine Entfernungsmessung oder eine daraus abgeleitete Grösse, wie Geschwindigkeit oder Beschleunigung dient. Dabei wird es sich im allgemeinen um eine Laufzeitmessung, insbesondere mit Impulslicht, seltener mit Phasenvergleich, handeln, doch könnte die Entfernungsmessung, wie bei Nivelliergeräten, auch trigonometrisch, d.h. nach Art eines Basisentfernungsmessers durchgeführt werden.

In jedem Falle kann aber so beispielsweise der Einfluss einer atmosphärischen Refraktion ebenso korrigiert werden, wie auch die Vorteile eines sichtbaren Laserbündels mit denen eines Lasers im Infrarot-Bereich kombiniert werden können.

Die Abgabe wenigstens zweier unterschiedlicher Wellenlängen könnte an sich auf verschiedene Weise erfolgen, beispielsweise durch Anordnung zweier Lichtquellen, die vorzugsweise (aber nicht unbedingt) in einem einzigen Strahlengang miteinander kombiniert werden. Es wird allerdings im allgemeinen zu bevorzugen sein, wenn die Laseranordnung nur einen einzigen Laser zur Erzeugung der mindestens zwei Wellenlängen aufweist.

Es ist vorteilhaft, wenn eine nach einem solchen Verfahren arbeitende Vorrichtung die Merkmale des Anspruches 1 aufweist. Das liegt daran, dass ein passiv pulsierender Festkörperlaser verwendet werden kann. Herkömmliche Festkörperlaser sind aber sehr energieaufwendig, so dass man hier an Grenzen stösst, wenn sie in einem tragbaren Gerät, wie einem Entfernungsmessgerät, mit ausreichender Energie zu versorgen sind. Die Verwendung eines Mikrolasers, wie etwa von N. Mermilliod et al. in Applied Physics Letters, 1991, Vol. 59, Nr. 27, S. 3519, beschrieben, ermöglicht es, einen passiv pulsierenden Lasers auch in einem tragbaren Gerät mit Vorteil zum Einsatz zu bringen. Weitere Einzelheiten und Merkmale der vorliegenden Erfindung ergeben sich an Hand der nachfolgenden Beschreibung von in der Zeichnung schematisch dargestellten Ausführungsbeispielen. Es zeigen:

Fig. 1   eine erste Ausführungsform einer erfindungsgemässen Tachymeter-Optik;
Fig. 2   die verfügbaren Impulse zweier unterschiedlicher Wellenlängen;
Fig. 3   eine zweite Ausführungsform einer erfindungsgemässen Tachymeter-Optik und
Fig. 4   ein erfindungsgemäss aufgebautes Hand-Gerät zur Entfernungsmessung.

In einem strich-punktiert lediglich angedeuteten Tachymetergehäuse T ist zunächst ein Pumplaser 1 mit einer davor angeordneten Konvexlinse 2 und einem dahinter befindlichen thermoelektrischen Kühler 1' vorgesehen. Der Pumplaser 1 wirft in an sich bekannter Weise Pumpleistung in Form von Strahlung auf einen davor in der Fokalebene der Linse 2 befindlichen Mikrolaser 3, der seinerseits ein Lasersendebündel über eine Linse 4 abgibt. Es ist von Vorteil, wenn dieser (einzelnen oder mehrfachen) Linse 4 ein Blockfilter 5 für die Pumplaserstrahlung des Lasers 1 zugeordnet, insbesondere in der gezeigten Weise nachgeschaltet, wird.

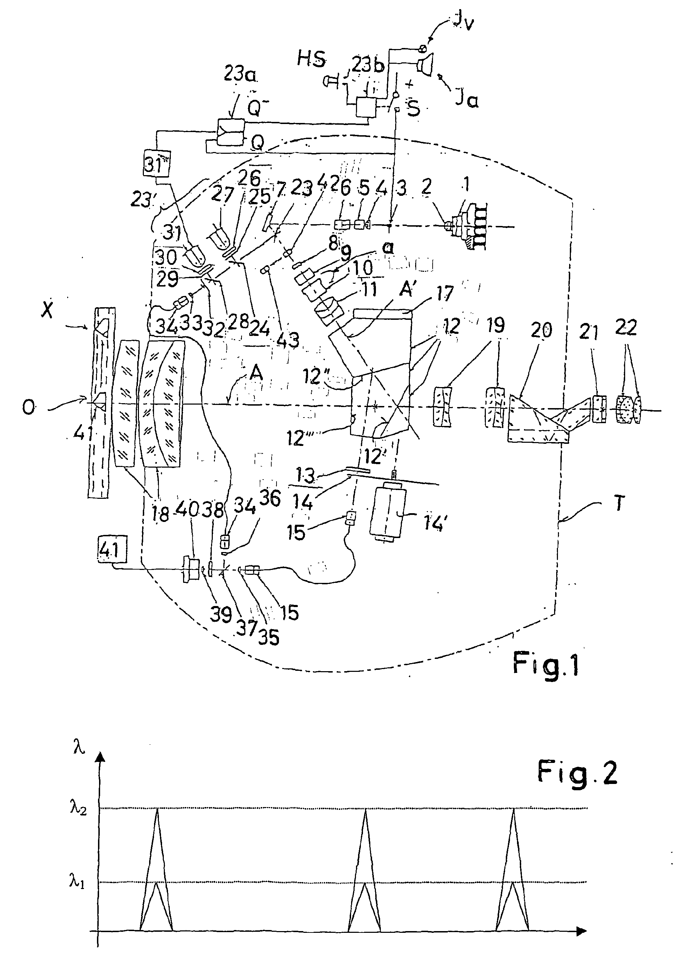

Im Strahlengang ist nach dem Mikrolaser (oder Mikrochip-Laser) 3 ein optischer Frequenzwandler 6 vorgesehen. Mit einem Frequenzwandler, wie beispielsweise KTP (Kalium Titanyl Phosphat) als Frequenzverdoppler, wird zusätzlich zur vom Laser 3 abgegebenen Wellenlänge, beispielsweise von etwa 1064 nm (infrarot), durch Erzeugung der zweiten Harmonischen eine Wellenlänge von etwa 532 nm erzeugt, die im sichtbaren Bereich liegt. "Zusätzlich" deshalb, weil ein solcher optischer Frequenzwandler nur einen Teil der eingehenden Strahlung umwandelt. Am Ausgang des Frequenzwandlers 6 treten daher gleichzeitig zwei unterschiedliche Wellenlängen λ1 und λ2 auf, wie aus Fig. 2 ersichtlich.

Wenn hier von einem optischen "Frequenzwandler" die Rede ist, und ein Frequenzverdoppler eine bevorzugte Form eines solchen Frequenzwandlers darstellt, so liegt auch eine Frequenzverdreifachung durchaus im Rahmen des Möglichen. Eine solche Verdreifachung kann durch Frequenzverdopplung und anschliessende Mischung (Frequenzaddition) des verdoppelten Signals mit dem - Signal des Lasers 3 bewerkstelligt werden, d.h. f $\Rightarrow$ 2f, 2f + f = 3f.

Das so erzeugte Sendebündel mit den zwei unterschiedlichen Wellenlängen λ1 und λ2 wird über eine reflektierende Fläche, wie einen Spiegel 7, umgelenkt. Danach ist vorzugsweise ein Strahlenteiler 23 angeordnet, der einen Teil des Sendestrahlenbündels zu einer weiter unten beschriebenen Überwachungseinrichtung 23' leitet. Damit kann die richtige und sichere Funktion der oben beschriebenen optischen Komponenten überwacht werden, um Schäden insbesondere durch die unsichtbare Laserstrahlung bei Ausfall der sichtbaren Strahlung zu vermeiden.

Wie aus Fig. 1 ersichtlich, sind im divergenten Strahlengang, d. h. im Sendestrahlengang, weitere optische Komponenten 8 bis 11 vorgesehen. Es handelt sich dabei um eine das Strahlenbündel aufweitende Optik, die beispielsweise von einer einzigen Linse 8 gebildet sein kann. Diese Linse ist gegebenenfalls Teil eines an sich bekannten Temperaturkompensators, wobei die hier nicht gezeigte Fassung der Linse oder ein mit derselben verbundener Abstandsring aus einem Material mit einem solchen Wärmeausdehnungskoeffizienten besteht, dass temperaturbedingte Fokusabweichungen automatisch kompensiert werden. Dazu verschiebt sich die Linse 8 auf Grund der Wärmeausdehnung eines solchen Ringes beispielsweise entgegen der Wirkung einer sie gegen den Ring drückenden Feder, obwohl eine formschlüssige Verbindung der Linse mit dem sich ausdehnenden Ring ebenso denkbar wäre. Solche Temperaturkompensatoren sind für Optiken an sich bekannt.

Danach kann in diesem divergenten Sendestrahlengang eine in nicht dargestellter Weise neigbar gelagerte erste Planplatte 9 vorgesehen werden, mit deren Hilfe die Achse des Sendebündels und ihre relative Lage zu der Fernrohrachse A durch Neigen der ersten Planplatte 9 so justiert werden kann, dass sie genau auf der Fernrohr-Achse liegt. Zu diesem Zweck kann die Planplatte 9 kardanisch gelagert und mittels einer für optische Zwecke an sich bekannten Justiereinrichtung, wie zwei an der Platte 9 angreifenden, zueinander in einem rechten Winkel wirkenden und von ausserhalb des Gehäuses T drehbaren Exzentern, hinsichtlich ihrer Neigung zur Achse A verstellbar sein.

Gewünschtenfalls kann in diesem divergenten Sendestrahlengang, wie ein Pfeil a andeutet, ein einschaltbares weiteres optisches Glied in Form einer auch als Abschwächer wirkenden, zweiten Planplatte 10 zur Defokussierung des Senders bei Messung auf einen, insbesondere am Objekt angebrachten, Reflektor vorgesehen werden.

Es hat sich herausgestellt, dass die geringe Divergenz von weniger als 0,1 mrad, gegebenenfalls von < 0,05 mrad, oder auch von nur etwa 0,03 mrad, des ausgesandten beugungsbegrenzten Sendestrahlenbündels bei Messung auf Reflektoren, wie insbesondere Tripelreflektoren, nachteilig sein kann. Denn zum einen ist das Anzielen des Reflektors sehr empfindlich und daher für den Benutzer des Gerätes wenig komfortabel, zum anderen führt die Turbulenz in der Atmosphäre, das sogenannte "Luftflimmern", zu starken Schwankungen des Messsignals und, dadurch bedingt, zu unerwünscht langen Messzeiten. Wird eine planparallele Platte 10 in den Strahlengang geschaltet, so wird die Sendebündeldivergenz etwas aufgeweitet, beispielsweise von 0,03 auf 0,5 mrad. An der einschaltbaren Planplatte 10 wird vorzugsweise ein Sperrfilter für die sichtbare Wellenlänge sowie ein Abschwächfilter für die IR-Wellenlänge aufzubringen sein, so dass der Operator am Reflektor nicht vom sichtbaren Licht geblendet wird und von der IR-Strahhlung nicht geschädigt wird.

Es kann gegebenenfalls auch eine Umschalteinrichtung, allenfalls in Form der planparallelen Platte 10 selbst, vorgesehen sein, um alternierend infraroten oder sichtbaren Strahlungsanteil abzustrahlen. Dadurch wird zwar die Messzeit verlängert, doch können auf diese Weise die Grenzen der Laser-Sicherheitsvorschriften voll, d.h. zu 100%, ausgenutzt werden (sequentieller Betrieb). Hier muss allerdings wegen der Dauer des Blinkreflexes des Auges von 0,25 s der Wechsel relativ rasch vorgenommen werden, z.B. schneller als 3 Hz, insbesondere schneller als 4 Hz.

Im Tachymetergehäuse T ist weiters ein Fernrohrobjektiv 18 angeordnet. An sich könnte an Stelle des Umlenkspiegels 7 in geradliniger Fortsetzung des vom Laser 3 ausgehenden Sendestrahles ein eigenes Sendeobjektiv vorgesehen werden. Ist aber entsprechend der gezeigten Anordnung die Achse des Sendestrahls koaxial zur Fernrohrachse A, so werden Parallaxen bezüglich des Sichtfeldes vermieden. Wie weiter unten dargestellt, wird vorzugsweise das Fernrohrobjektiv 18 auch, wenigstens der Hauptsache nach, die Empfangsoptik darstellen.

Das Fernrohrobjektiv weist eine chromatische Längsabweichung oder Aberration auf. Dies wird gerade dann zu einem Problem, wenn - wie im vorliegenden Fall - mindestens zwei unterschiedliche Wellenlängen λ1, λ2 abgegeben werden sollen und das Objektiv 18 gleichzeitig das Sendeobjektiv ist. Daher wird vorzugsweise im Sendestrahlengang ein Kompensationsobjektiv 11 zum Ausgleich dieser chromatischen Längsabweichung vorzusehen sein. Dieses Objektiv ist in der gezeigten Ausführung aus drei, beispielsweise miteinander verkitteten, Gliedern aufgebaut.

Um Objektoberflächen mit ortsabhängig unterschiedlichem Rückstrahlvermögen und Tiefenstrukturen kleiner lateraler Ausdehnung bzw. mit scharfen Kanten und Ecken vermessen zu können, muss der Messfleck klein sein und darf keine störenden Beugungsringe aufweisen. Strahlenbündel mit gaussförmiger lateraler Intensitätsverteilung im Nahfeld (am Objektiv 18) haben keine Beugungsringe im Fernfeld (z.B. bei 500 m), wenn das Gaussbündel nicht beschnitten wird.

Das Gaussbündel wird naturgemäss jedoch durch den Rand des Objektivs 18 beschnitten. Allerdings ist die Intensität der Beugungsringe um so kleiner, je kleiner der Durchmesser des Gaussbündels im Objektiv 18 gewählt wird. In der Praxis wurde gefunden, dass die Ausleuchtung des Objektivs 18 vorteilhafterweise so gewählt wird, dass das Gaussförmige Laserbündel erst bei einem Intensitätswert des < 0.09 fachen der Maximalintensität durch den Objektivrand beschnitten wird. Das ist der Fall, wenn der $1/e^2$ Bündeldurchmesser-<0.9 mal dem Objektivdurchmesser ist. Dann ist nämlich die Intensität des ersten Beugungsrings im Fernfeld (z.B. bei 500 m) <0.003 der Maximumintensität, was für die meisten Fälle in der Praxis gerade ausreichend klein ist. Der $1/e^2$ Bündeldurchmesser am Objektiv 18 soll also möglichst klein sein, damit die Intensität der Beugungsringe klein ist. (e ist die Eulersche Zahl). Andererseits besteht, wie oben ausgeführt, die Forderung, dass der zentrale Laserfleck im Fernfeld (z.B. bei 500 m) möglichst klein bleibt. Das ist jedoch gerade dann der Fall, wenn der Laserbündeldurchmesser im Objektiv 18 gross ist. In der Praxis soll der $1/e^2$ Durchmesser im Fernfeld (z. B. bei 500 m) nicht mehr als doppelt so gross sein wie der minimal mögliche Durchmesser (Airy-Beugungsscheibchen), der bei gleichförmiger Ausleuchtung des Objektiv 18 auftritt. Der zentrale Fleck im Fernfeld ist gerade dann nicht mehr als doppelt so gross wie das Airy Scheibchen, wenn man die Ausleuchtung des Objektivs so wählt, dass der Objektivrand die gaussförmige Intensitätsverteilung bei einer Intensität > 0.004 vom der Maximalintensität abschneidet. Das entspricht einem $1/e^2$ Durchmesser des Gaussbündels, der 0.6 mal dem Objektivdurchmesser beträgt.

Als Kompromiss ergibt sich eine Dimensionierungsvorschrift für die Ausleuchtung des Sendeobjektivs:

$$\text{Objektivdurchmesser} * 0.6 < \frac{1}{e^2} - \text{Durchmesser Laser} < \text{Objektivdurchmesser} * 0.9.$$

Als Beispiel: $\frac{1}{e^2} - \text{Durchmesser Laser} = \text{Objektivdurchmesser} * 0.75.$

| | |
|---|---|
| Objektivdurchmesser | $2a = 40$ mm |
| $1/e^2$-Durchmesser des Lasers am Objektiv | $2w_0 = 30$ mm |
| $1/e^2$-Durchmesser des Lasers bei 500 m | $2w_0 = 26$ mm |
| Durchmesser des 1. Beugungsringes bei 500m | $2r_1 = 52$ mm |
| Intensitätsverhältnis 1. Beugungsring zu Maximalintensität | $I_1/I_0 = 0.0008$ |

Der vom Kompensationsobjektiv 11 kommende Sendestrahlengang wird über ein Teilerprisma 12 mit einer teilverspiegelten Umlenkfläche 12' in den Strahlengang des Fernrohrobjektivs 18 mit der Achse A eingespiegelt. Das Teilerprisma 12 besitzt zweckmässig eine weitere, unter einem anderen Winkel liegende teilverspiegelte Umlenkfläche 12", über die der von der Fläche 12' auf sie geworfene Empfangsstrahl entlang einer Achse A" auf eine Empfangseinrichtung 13-15 und 34-40 gelenkt wird. Dabei ist die Fläche 12' zweckmässig mit einer selektiven Beschichtung so belegt, dass nur der sichtbare Anteil des empfangenen Lichtes durchgelassen, der Infrarot-Anteil jedoch reflektiert wird.

Die Empfangseinrichtung 13-15 und 34-40 weist in ihrem Eingangsteil die Empfangsfläche einer Lichtleit-Faser 15 auf. Dieser Lichtleit-Faser 15 ist vorteilhaft eine Planplatte als Träger einer Antireflexblende 13 vorgeschaltet. Bei der dargestellten Optik werden auch bei hochqualitativer Fertigung und Vergütung Falschreflexe auftreten, wobei der stärkste Reflex der Sendestrahlung, welcher auf die Empfangseinrichtung 13-15 und 34-40 treffen kann, von dem Teilerprisma 12 selbst herrührt, insbesondere von der Fläche 12"'. Dieses Reflexbündel ist naturgemäss divergent und hat am Ort der Empfangsfaser 15 einen Durchmesser, der etwa 500 mal grösser ist als der Durchmesser der Lichtleit-Faser 15 selbst. Dagegen ist das auf die Lichtleit-Faser 15 treffende Strahlenbündel des für die Laufzeitmessung nötigen Empfangsstrahles durch die Bündelung durch das Objektiv 18 konvergent. Das bedeutet, dass der Durchmesser des Empfangsstrahlenbündels etwa für eine Objektentfernung von mehr als etwa 80 m kleiner als die Eintrittsfläche der Lichtleit-Faser 15 sein wird.

Das Problem der Falschreflexe wird durch eine Antireflexblende 13 gelöst, welche von der Lichtleit-Faser 15 beabstandet, also ausserhalb der an der Eintrittsfläche liegenden Bildebene des Objektivs 18, angeordnet ist. So wird Reflexstrahlung, über den Durchmesser der Eintrittsfläche der Lichtleit-Faser 15 abgeschattet, während die auf die Eintrittsfläche der Lichtleit-Faser 15 fallende Empfangsstrahlung praktisch nicht geschwächt wird, da sie am Ort der Antireflexblende 13 noch genügend aufgeweitet ist. Selbstverständlich werden durch eine solche Antireflexblende 13 auch andere Reflexe als die von der Fläche 12''' herrührenden entsprechend geschwächt, da sie - bei einem zentrierten optischen System - an der Empfangsbündelachse liegen. Da es sich beim Fernrohrobjektiv 18 um ein zentriertes optisches System handelt, und da sowohl die Laserstrahlungsquelle als auch die Eintrittsfläche der Lichtleit-Faser 15 auf die Achse dieses Objektivs einjustiert sind, liegen alle Reflexe und der Schatten der Antireflexblende 13, welcher durch die Reflexe hervorgerufen wird, auf dieser Achse.

Als Beispiel:

| | |
|---|---|
| Durchmesser der Antireflexblende: | 0.6 mm |
| Abstand der Antireflexblende von der Eintrittsfläche der Lichtleit-Faser | 7 mm |
| Durchmesser des Empfangsbündels in der Ebene der Antireflexblende | 2.3 mm |
| Signalverlust durch den Einfluss der Antireflexblende | 7 % |

Weitere Falsch- und Streureflexe werden von einer als optischer Sumpf fungierenden Neutralglasplatte 17 "verschluckt", die am Teilerprisma 12 vorgesehen ist.

Ein Abschwächelement 14 ist über ein Stellglied 14' in den Empfangsstrahlengang wahlweise einschaltbar und dient zur Abschwächung des zu grossen Empfangssignals bei kleinen Distanzen.

Komponenten 19 bis 22 an sich herkömmlicher Natur sind Teile des Fernrohrs. Sie umfassen ein aus einem Achromaten gebildetes Fokussierlinsensystem 19, das aus einer mit vollen Linien gezeigten Extremstellung E1 in eine strichliert dargestellte, andere Extremstellung E2 bringbar ist. Diesem Fokussierlinsensystem 19 folgt ein Umkehrprisma 20, zum Umkehren des vom Objektiv 18 erhaltenen Bildes. Anschliessend ist zweckmässig eine Strichplatte 21, z.B. mit einem Fadenkreuz, vorgesehen und schliesslich ein Okularsystem 22 herkömmlicher Ausgestaltung.

Über den Strahlenteiler 23 wird ein bestimmter Anteil des Sendestrahlbündels einer Überwachungseinrichtung 23' zugeführt, welche mindestens einen für die von der Sendeanordnung 1 bis 6 abgegebene, sichtbare Strahlung empfindlichen Sensor oder Empfänger 31 aufweist. Wird also der Laser 3 über einen Schalter S in Betrieb gesetzt, so geht ein Startsignal an eine logische Stufe 23a, die als Vergleichsstufe angesprochen werden kann, gegebenenfalls aber von einem NAND-Gatter gebildet ist. Im vorliegenden Ausführungsbeispiel wird diese logische Stufe 23a von einem Flip-Flop gebildet, das von dem vom Schalter S kommenden Signal im Sinne eines Umschaltens des Flip-Flops 23a auf seinen Ausgang Q geschaltet wird. Dieser Ausgang Q ist mit einer Steuerstufe 23b für den Schalter S verbunden und öffnet den Schalter S, wenn sie ein Signal vom Flip-Flop 23a erhält. Damit wird der Laser 3 abgeschaltet.

Der andere Eingang des Flip-Flops 23a ist mit einer Impulsformerstufe 31' verbunden, welche an den Empfänger 31 für sichtbares Licht angeschlossen ist und dessen Signale auswertet. Dem Empfänger 31 kann ein entsprechendes Filter 30 vorgeschaltet sein, sofern er nicht selbst so ausgebildet ist, dass er nur auf sichtbare Strahlung anspricht. Dabei erhält der Empfänger 31 das von der Sendeanordnung 1-6 ausgehende Licht über einen Umlenkspiegel, der - wie weiter unten erläutert - als Strahlenteiler 28 ausgebildet ist. Nötigenfalls kann ein Abschwächelement 29, wie eine Blende oder ein Filter, dem Empfänger 31 vorgeschaltet sein.

Erhält der Empfänger 31 - infolge des Auftretens sichtbarer Strahlung - ein Signal, so schaltet die Stufe 31' das Flip-Flop 23a wieder auf den Ausgang Q, der mit keiner nachfolgenden Stufe verbunden ist. In diesem Falle erhält also die Steuerstufe 23b kein Signal, und der Schalter S bleibt weiterhin geschlossen, bis ein Hauptschalter HS manuell betätigt wird. Wird ein NAND-Gatter verwendet, so ergibt sich ein Signal an die Steuerstufe 23b immer dann, wenn am Eingang des NAND-Gatters nur das Signal vom Schalter S ansteht, wogegen das Signal vom Empfänger 31 fehlt.

Es ist vorteilhaft, wenn für eine solche Fehlfunktion eine Anzeige, z.B. mittels einer akustischen Anzeigeeinrichtung Ia und/oder einer visuellen Anzeigeeinrichtung Iv, an die Steuerstufe angeschlossen ist. Eine visuelle Anzeige kann bevorzugt als LCD-Display ausgebildet sein, insbesondere dann, wenn - wie unten erläutert - mehr als eine Fehlermöglichkeit überwacht wird.

Denn dies ist nur eine Möglichkeit der Überwachung der Sendeanordnung 1 bis 6. Fehlt die sichtbare Strahlung trotz eingeschaltetem Schalter, so liesse dies auf ein Versagen, beispielsweise des die sichtbare Strahlung produzierenden Frequenzwandlers 6 schliessen. In diesem Falle ist die Gefahr gegeben, dass Personen vom Infrarot-Laserstrahl getroffen werden, ohne auch von der ihre Aufmerksamkeit auslösende sichtbare Strahlung, weshalb der Laser 3 sofort abzuschalten ist.

Die Überwachungseinrichtung 23' kann aber auch noch weitere Komponenten aufweisen. Sie kann einen weiteren, dem Empfänger 31 vorzugsweise vorgeschalteten, Infrarot-empfindlichen Empfänger 27 aufweisen, der die Abgabe von Infrarot-Strahlung aus der Sendeanordnung 1-6 überwacht. Die an diesen Empfänger oder Detektor 27 anschliessende Schaltung kann analog zu der an Hand der Stufen 23a, 23b und 31' beschriebenen Schaltung aufgebaut sein. Ebenso kann die optische Anordnung wieder ein Filter 26, einen Abschwächer 25 und einen Strahlenteiler 24 aufweisen.

Wird nämlich nach dem Schliessen des Schalters S überhaupt kein Signal erhalten, was am Empfänger 27 feststellbar ist, so bedeutet das, dass nicht etwa der Frequenzwandler 6 ausser Funktion ist, sondern, dass der Laser 3 und/oder seine Pumplichtquelle 1 nicht funktioniert. Da also dies eine weitere überwachbare Fehlfunktion ist, ist es vorteilhaft, wie oben erwähnt, die visuelle Anzeige Iv als LCD-Display auszubilden. In diesem Falle wird es günstig sein, wenn die Steuerschaltung 23b als Prozessor ausgebildet wird, der die Ausgangssignale beider Empfänger 31 und 27 direkt oder indirekt (über Auswerte- bzw. Impulsformerstufen, wie die Stufe 31') erhält und dementsprechend die entsprechende Anzeige aus einem Speicher mit nachgeschalteter Treiberstufe zum Ansteuern des Displays abruft.

Der weitere, über den Strahlenteiler 28 erhaltene Teilstrahl wird über ein weiteres Abschwächelement 32 (die Leistung des Lasers 3 ist vor den empfindlichen Bauteilen zweckmässig abzuschwächen) und eine Sammellinse 33 einer weiteren Empfänger-Lichtleitfaser 34 oder einem weiteren Empfänger zugeleitet. Dieser Empfänger dient zum Auslösen der Zeitzählung in einer nachgeschalteten Auswerteeinrichtung 41 an sich herkömmlicher Ausgestaltung.

Die Zuführung des optischen Startimpulses erfolgt dabei vorteilhaft über dieselbe Photodiode 40 (oder einen anderen lichtelektrischen Wandler, wie einen Phototransistor), die auch das nach Reflexion am anvisierten Objekt über das Faserbündel 15 erhaltene Lichtsignal empfängt.

Dem Faserbündel 34 ist eine Sammellinse 36 nachgeschaltet, um etwaige Lichtverluste zu vermeiden. Danach gelangt das Startimpulslicht an eine Strahlenteilerfläche 37, die den Lichtimpuls vorteilhaft über ein Filter 38 und eine weitere Linse 39 an die Photodiode 40 abgibt. Das Filter 38 ist vorzugsweise nur für die Infrarot-Laserstrahlung transmissiv, sperrt hingegen sichtbare Strahlung, um Beeinflussungen zu verhindern. Die Photodiode 40 ist Teil der nachgeschalteten elektronischen Auswerteeinrichtung 41.

Analog dazu ist die Zufuhr des Empfangsimpulses über die Lichtleitfaser 15 ausgebildet. Das aus der Lichtleitfaser 15 austretende Empfangslicht durchläuft eine Sammellinse 35 und dann den Strahlenteiler 37.

Um überprüfen zu können, ob die Lage der Achse des von der Sendeeinrichtung 1-6 ausgesandten Laserstrahlenbündels mit der Fernrohrzielachse A übereinstimmt, kann der sichtbare Anteil des Sendestrahles herangezogen werden, da - wie Fig. 2 zeigt - die beiden ausgesandten Wellenlängen $\lambda 1$ und $\lambda 2$ koaxiale, schmale Lichtbündel sind, so dass an Hand der sichtbaren Lichtmarkierung auch der Targetpunkt für den unsichtbaren Wellenlängenanteil erkennbar wird.

Für eine solche Überprüfung ist vorteilhaft eine Montageeinrichtung, wie eine Schiene 42, gegebenenfalls aber auch ein schwenkbarer Träger, für einen Tripelreflektor 11' vorgesehen und aussen an der (nicht dargestellten) Fassung des Objektivs 18 befestigt. Somit kann der Tripelreflektor 11' (oder eine dieselbe Funktion ausführende Anordnung von Spiegeln bzw. Linsen) aus der Ruhelage x in eine Arbeitslage o in die Achse A geschoben werden. Alternativ weist die Fassung des Objektivs 18 ein Gewinde oder eine Bajonettverbindung zum Aufstecken bzw. Aufschrauben eines solchen Tripelreflektors oder seines Äquivalents auf.

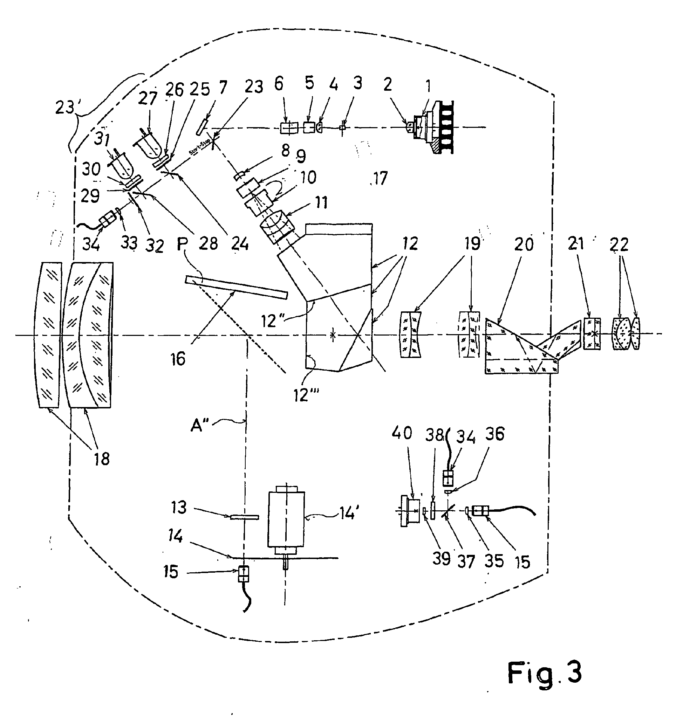

Fig. 3 zeigt eine der Fig. 1 entsprechende Darstellung (ohne oben beschriebene elektronische Komponenten). Teile gleicher Funktion haben dieselben Bezugszeichen wie in Fig. 1. Unterschiedlich ist vor allem, dass in den konvergenten Strahlengang hinter dem Fernrohrobjektiv 18 eine relativ dünne Strahlenteilerplatte bzw. Planplatte 16 einschwenkbar ist. Dies hat seinen Grund darin, dass das kombinierte Teilerprisma 12 für den Sende- und den Empfangsstrahlengang im Strahlengang des Fernrohres 18 sehr reflexarm vergütet sein muss, um zu verhindern, dass der Empfänger mit der Photodiode 40 durch Senderreflexe übersteuert wird.

Um nun das Teilerprisma 12 nur zum Einkoppeln der Sendestrahlung und nicht auch zum Auskoppeln der Empfangsstrahlung zu verwenden (für welchen Fall gegebenenfalls auf die Teilverspiegelung der Fläche 12" verzichtet werden kann), kann die Planplatte um einen Schwenkpunkt P aus der mit vollen Linien gezeigten Ruhelage in die strichliert dargestellte Arbeitslage geschwenkt werden, in der sie den Empfangsstrahl entlang der Empfangsachse A" umlenkt. Natürlich könnte die Platte 16 statt schwenkbar auch in anderer Weise aus einer Ruhelage in die gezeigte Arbeitslage gebracht werden, beispielsweise verschiebbar sein.

Eine geneigte Planplatte dieser Art im konvergenten Strahlengang des Fernrohrobjektivs 18 zu verwenden, war bisher nicht üblich, da dadurch ein die Qualität des Bildes verschlechternder Astigmatismus resultiert. Die Grösse des Astigmatismus hängt aber von der jeweiligen Dicke einer solchen Planplatte 16 ab. Deshalb ist es bevorzugt, wenn die Planplatte 16 eine Dicke von <0,3 mm, vorzugsweise <0,2 mm, aufweist, mithin also sehr dünn ausgebildet ist. Sie wird daher zur mechanischen Verstärkung zweckmässig von einem sie umgebenden Rahmen getragen.

Die Planplatte 16 ist vorzugsweise so beschichtet, dass das sichtbare Licht für die Fernrohrfunktion durchgelassen wird und für die Wellenlänge des Distanzmessers (z.B. Infrarot )das entsprechende Teilerverhältnis realisiert wird. Zwar wäre es im Hinblick auf die Einschwenkbarkeit der Planplatte 16 (vorzugsweise gegen einen die Arbeitslage bestimmenden, durch einen Exzenter oder eine Schraube od.dgl., justierbaren Anschlag) auch denkbar, auf eine Teilerfunktion ganz zu verzichten und für die Messung die Planplatte 16 in die Arbeitslage zu schwenken und auf die Betrachtung des anvisierten Objektes während dieser Zeit zu verzichten, was allerdings für den Benützer wenig komfortabel ist. In einem solchen Fall könnte die Planplatte 16 auch fest eingebaut sein. Im Interesse einer verbesserten Bildqualität bei in Ruhelage befindlicher Planplatte 16 wird jedoch die schwenkbare Anordnung vorzuziehen sein.

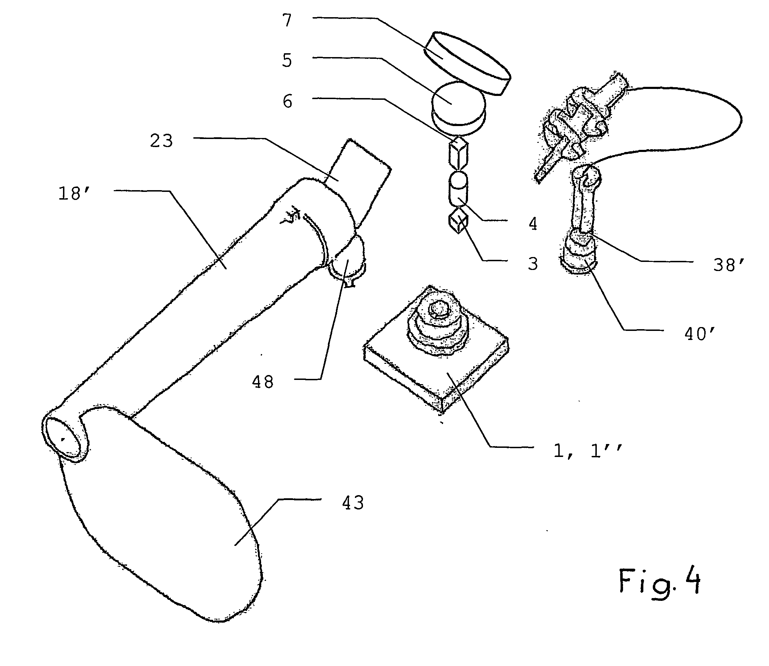

Während die Ausführungsformen nach den Fig. 1 und 3 optische Ausgestaltungen zeigen, wie sie für Tachymeter möglich sind, zeigt Fig. 4 die Anordnung für ein tragbares Entfernungsmessgerät. Dabei ist darauf hinzuweisen, dass es nur auf die Art der Auswerteeinrichtung 41 (s. Fig. 1 und 3) ankommt, ob die Entfernung mit einer einmaligen Messung bestimmt wird oder ob durch zweimaliges Messen die Geschwindigkeit oder eine andere Ableitung, wie die Beschleunigung, gemessen wird. Auch wurde bereits erwähnt, dass die Erfindung - etwa zur Korrektur atmosphärischer Refraktion - auch bei Nivelliergeräten nach dem trigonometrischen Prinzip mit Vorteil anwendbar ist. Ein solches Nivelliergerät könnte prinzipiell einen ähnlichen Aufbau haben wie er nachstehend an Hand der Fig. 4 geschildert wird. Auch hier haben Teile gleicher Funktion wie in den vorherigen Ausführungsbeispielen dieselben Bezugszeichen.

Fig. 4 zeigt den Pumplaser 1 auf einem Peltierelement 1". Mikrolaser 3, Linse 4, Frequenzwandler (KTP) 6, Filter 5, Spiegel 7 und Strahlenteiler 23 sind zu erkennen. An der Fassung 18' des Objektivs, das hier nicht unbedingt als Fernrohr ausgebildet sein muss, befindet sich eine Pin-Diode 48 für den Referenzlichtweg. In einem Gehäuse 43 ist das Empfangsobjektiv untergebracht. An der rechten Seite der Fig. 4 ist die Faserhalterung mit der zu einem Interferenzfilter und der Empfangsdiode führenden Faser lediglich angedeutet; prinzipiell ist diese Anordnung ähnlich derjenigen, wie oben beschrieben, aufgebaut.

Es versteht sich, dass die Ausgestaltung des Entfernungsmessers im Rahmen der Erfindung in weiten Grenzen variabel ist. Die vorliegende Erfindung ermöglicht es, als Lichtquelle einen Mikrolaser vorzusehen, wobei Strahlung mindestens zweier unterschiedlicher Wellenlängen abgegeben werden, gegebenenfalls beide über den einen Mikrolaser, die gegebenenfalls gleichzeitig bzw. beinahe gleichzeitig (wenn der oben geschilderte relativ rasch aufeinanderfolgende sequentielle Betrieb angestrebt wird) gesendet wird und wobei nach Empfang, sei es zur eigentlichen Messung, sei es zum Anvisieren od.dgl., die über die Strahlung unterschiedlicher Wellenlänge verfügbare Information gemeinsam ausgewertet wird. In diesem Sinne ist "im wesentlichen gleichzeitig" zu verstehen.

Auch könnten beispielsweise zwei oder mehr unterschiedliche Wellenlängen im unsichtbaren Bereich für die Korrektur der atmosphärischen Refraktion herangezogen werden, wobei gegebenenfalls auf die sichtbare Strahlung verzichtet wird.

**Patentansprüche**

1. Vorrichtung zur optischen Distanz- oder Geschwindigkeitsmessung nach dem Impulsmessprinzip, bzw. Nivelliervorrichtung, mit einer über ein Objektiv (18) ein Laserstrahlenbündel sendenden Sendeanordnung (1-6) mit wenigstens einem Festkörperlaser (3) als Strahlungsquelle, mit einem Empfänger (15, 40) für das von einem Objekt reflektierte, über das Objektiv (18) empfangene Laserstrahlenbündel, welchem Empfänger (15, 40) eine Auswerteeinrichtung (41) nachgeschaltet ist, wobei die Sendeanordnung (1-6) wenigstens einen passiv pulsierenden Mikrolaser (3) umfasst, welcher wenigstens Strahlung mit einer Wellenlänge im unsichtbaren Bereich ($\lambda 1$), insbesondere im Infrarot-Bereich und wenigstens eine weitere Strahlung anderer Wellenlänge ($\lambda 2$), wovon wenigstens eine im sichtbaren Bereich liegt, im wesentlichen gleichzeitig aussendet, welche Strahlungen als koaxiale Strahlungsbündel ausgesandt werden, wobei die nach Empfang der mindestens zwei Wellenlängen ($\lambda 1, \lambda 2$) verfügbare Information gemeinsam ausgewertet wird, und wobei das Objektiv (18) zur Abgabe eines beugungsbegrenzten, gaussförmigen Bündels ausgebildet ist, **dadurch gekennzeichnet, dass** eine Überwachungseinrichtung (23') für die Abstrahlung der sichtbaren Strahlung vorgesehen ist, wobei eine Schaltstufe (23b, S) zum Abschalten mindestens des die Strahlung mit der Wellenlänge im unsichtbaren Bereich aussendenden Teils der Sendeanordnung (1-6) bei fehlender sichtbarer Strahlung vorgesehen ist.

2. Vorrichtung nach Anspruch 1, **dadurch gekennzeichnet, dass** zur Auftrennung der beiden Wellenlängenanteile ein Strahlenteiler (12; 16), insbesondere ein Teilerprisma (12), vorgesehen ist, und dass insbesondere wenigstens einem Empfänger (15, 40) eine ausserhalb der Bildebene des Empfängers (15, 40) angeordnete Antireflexblende (13) vorgeschaltet ist, welche vorzugsweise entsprechend dem Querschnitt der Eintrittsfläche des Empfängers dimensioniert ist.

3. Vorrichtung nach Anspruch 1 oder 2, **dadurch gekennzeichnet, dass** das Objektiv so ausgebildet ist, dass das eine gaussförmige Intensitätsverteilung aufweisende Laserstrahlenbündel vignettiert und bei einem Intensitätswert für den ersten Beugungsring vom <0,15-fachen, vorzugsweise <0,12-fachen , insbesondere <0,09-fachen, der Maximalintensität beschnitten wird.

4. Vorrichtung nach einem der Ansprüche 1 bis 3, **dadurch gekennzeichnet, dass** dem Empfänger (15, 40) ein nur für den unsichtbaren Wellenlängenanteil transmissives, sichtbare Strahlung hingegen sperrendes optisches Filter (38) vorgeschaltet ist.

**5.** Vorrichtung nach einem der Ansprüche 1 bis 4, **dadurch gekennzeichnet, dass** Sendeanordnung (1-6) und Empfänger (15, 40) eine koaxiale, gemeinsame Optik aufweisen.

**6.** Vorrichtung nach Anspruch 5, **dadurch gekennzeichnet, dass** es als Tachymeter mit einem Fernrohrobjektiv (18) ausgebildet ist, wobei insbesondere der Strahlengang des Tachymeters, in welchen der Sendestrahl der Sendeanordnung (1-6) einleitbar ist, der Strahlengang des Fernrohrobjektivs (18) ist.

**7.** Vorrichtung nach einem der Ansprüche 1 bis 6, **dadurch gekennzeichnet, dass** die Sendeanordnung (1-6) einen dem Mikrolaser (3) nachgeschalteten optischen Frequenzwandler, insbesondere einen optischen Frequenzverdoppler (6), aufweist.

**8.** Vorrichtung nach einem der Ansprüche 1 bis 7, **dadurch gekennzeichnet, dass** zur Auskoppelung des von einem Objekt reflektierten Messstrahlenbündels zum Empfänger (15, 40) hin eine Planplatte (16) im konvergenten Strahlengang des Objektivs (18) dem Empfänger (15, 40) vorgeschaltet ist.

**9.** Vorrichtung nach Anspruch 8, **dadurch gekennzeichnet, dass** die Planplatte (16) eine Dicke von <0,3 mm, vorzugsweise <0,2 mm, aufweist, welche Planplatte (16) insbesondere teilverspiegelt ausgebildet ist und aus einer Ruhelage ausserhalb des Strahlenganges des Objektivs (18) in eine Arbeitslage innerhalb des Strahlenganges bewegbar, insbesondere schwenkbar, ist.

**10.** Vorrichtung zur optischen Distanz- oder Geschwindigkeitsmessung nach dem Impulsmessprinzip, bzw. Nivelliervorrichtung, nach einem der Ansprüche 6 bis 9, **dadurch gekennzeichnet, dass** dem Objektiv (18) eine Justiereinrichtung zur Justierung der Achse des Sendestrahlbündels und deren relativen Lage zur Achse des Fernrohrs, insbesondere in Form einer neigbaren Planplatte (9) im divergenten Strahlengang zugeordnet ist.

**11.** Vorrichtung nach einem der Ansprüche 1 bis 10, **dadurch gekennzeichnet, dass** dem Objektiv (18) im Sendestrahlengang (A) ein Kompensationsobjektiv (11) zur Kompensation der chromatischen Längsabweichung bzw. Aberration des Objektivs (18) zugeordnet ist.

**12.** Vorrichtung nach einem der Ansprüche 1 bis 11, **dadurch gekennzeichnet, dass** dem Objektiv (18) im Sendestrahlengang (A) ein Temperaturkompensator, vorzugsweise in Form einer temperaturabhängig verschiebbaren Linse (8), zugeordnet ist.

**13.** Vorrichtung nach einem der Ansprüche 1 bis 12, **dadurch gekennzeichnet, dass** dem Objektiv (18) im Sendestrahlengang eine wahlweise einschaltbare Planplatte (10) zum Aufweiten des Strahlenbündels zugeordnet ist.

**14.** Vorrichtung nach einem der Ansprüche 1 bis 13, **dadurch gekennzeichnet, dass** eine Umschalteinrichtung zur sequentiellen Abgabe der unterschiedlichen Wellenlänge vorgesehen ist, welche gegebenenfalls in Form einer wahlweise einschaltbaren Planplatte (10) ausgebildet ist.

## Claims

**1.** Device for optical distance or speed measurement according to the pulse measurement principle, or levelling device, comprising a transmitting arrangement (1-6) transmitting a laser beam via an objective (18) and having at least one solid-state laser (3) as a radiation source, comprising a receiver (15, 40) for the laser beam reflected by an object and received via the objective (18), down-circuit of which receiver (15, 40) an evaluation device (41) is connected, the transmitting arrangement (1-6) comprising at least one passively pulsating microlaser (3) which substantially simultaneously emits at least radiation having a wavelength in the invisible range ($\lambda$1), in particular in the infrared range and at least one further radiation of another wavelength ($\lambda$2), of which at least one is in the visible range, which radiations are emitted as coaxial radiation beams, the information available after reception of at least two wavelengths ($\lambda$1, $\lambda$2) being evaluated together, and the objective (18) being formed to emit a diffraction-limited, Gaussian beam, **characterized in that** a monitoring device (23') for the emission of the visible radiation is provided, a switching stage (23b, S) being provided for switching off at least that part of the transmitting arrangement (1-6) which emits the radiation having the wavelength in the invisible range when visible radiation is absent.

**2.** Device according to Claim 1, **characterized in that** a beam splitter (12; 16), in particular a triple prism (12) is provided for separating the two wavelength components, and **in that** in particular an antireflection screen (13) arranged outside the image plane of the receiver (15, 40) is present up-circuit of at least one receiver (15, 40), which antireflection screen is preferably dimensioned to correspond to the cross-section of the entry surface of the receiver.

3. Device according to Claim 1 or 2, **characterized in that** the objective is formed so that the laser beam having a Gaussian intensity distribution is vignetted and is cut off at an intensity value for the first diffraction ring of <0.15 times, preferably <0.12 times, in particular <0.09 times, the maximum intensity.

4. Device according to any of Claims 1 to 3, **characterized in that** an optical filter (38) which transmits only the invisible wavelength component but blocks visible radiation is present up-circuit of the receiver (15, 40).

5. Device according to any of Claims 1 to 4, **characterized in that** transmitting arrangement (1-6) and receiver (15, 40) have a coaxial, common optical system.

6. Device according to Claim 5, **characterized in that** it is in the form of a tacheometer having a telescope objective (18), in particular the beam path of the tacheometer, into which the transmitted beam of the transmitting arrangement (1-6) can be introduced, is the beam path of the telescope objective (18).

7. Device according to any of Claims 1 to 6, **characterized in that** the transmitting arrangement (1-6) has an optical frequency converter, in particular an optical frequency doubler (6), which is present down-circuit of the microlaser (3).

8. Device according to any of Claims 1 to 7, **characterized in that** a plane-parallel plate (16) is present up-circuit of the receiver (15, 40) in the convergent beam path of the objective (18) for coupling out the measured beam reflected by an object towards the receiver (15, 40).

9. Device according to Claim 8, **characterized in that** the plane-parallel plate (16) has a thickness of <0.3mm, preferably <0.2mm, which plane-parallel plate (16) is in particular partly reflective and is moveable, in particular pivotable, from a rest position outside the beam path of the objective (18) into a working position within the beam path.

10. Device for optical distance or speed measurement according to the pulse measurement principle, or levelling device according to any Claims 6 to 9, **characterized in that** an adjusting device for adjusting the axis of the transmitted beam and the position thereof relative to the axis of the telescope, in particular in the form of a tiltable plane-parallel plate (9) in the divergent beam path, is coordinated with the objective (18).

11. Device according to any of Claims 1 to 10, **characterized in that** a compensating objective (11) for compensating the chromatic longitudinal deviation or aberration of the objective (18) is coordinated with the objective (18) in the transmitted beam path (A).

12. Device according to any Claims 1 to 11, **characterized in that** a temperature compensator, preferably in the form of a lens (8) displaceable as a function of temperature, is coordinated with the objective (18) in the transmitted beam path (A).

13. Device according to any of Claims 1 to 12, **characterized in that** a plane-parallel plate (10) which can optionally be switched on and is intended for diverging the beam is coordinated with the objective (18) in the transmitted beam path.

14. Device according to any of Claims 1 to 13, **characterized in that** a switching device for sequential emission of the different wavelength is provided and is optionally in the form of a plane-parallel plate (10) which can optionally be switched on.

**Revendications**

1. Dispositif de mesure optique de distance ou de vitesse, selon le principe de mesure d'impulsions ou dispositif de prise de nivellement, avec un dispositif émetteur (1-6) émettant un rayon de faisceau laser par un objectif (18), avec au moins un laser à corps solide (3) faisant office de source de rayonnement, avec un récepteur (15, 40) pour le faisceau de rayons laser réfléchis par un object et captés par l'objectif (18), en aval du récepteur (15, 40) étant installé un dispositif d'évaluation (41), le dispositif émetteur (1-6) comprenant au moins un micro-laser (3) pulsant, passif, émettant sensiblement simultanément au moins un rayonnement d'une longueur d'onde dans la plage invisible (λ1), en particulier dans la plage de l'infrarouge, et au moins un autre rayonnement d'une autre longueur d'onde (λ2), dont au moins l'une est dans la plage visible, les rayonnements étant émis sous forme de faisceaux de rayonnement coaxiaux, sachant que l'information disponible après réception des aux moins deux longueurs d'onde (λ1, λ2) est évaluée conjointement, et l'objectif (18) étant réalisé pour fournir un faisceau à forme gaussienne, à diffraction limitée, **caractérisé en ce qu'**un dispositif de surveillance (23') pour l'irradiation du rayonnement visible est prévu, sachant qu'un étage de commutation (23b, S), pour la mise en hors service d'au moins la partie, émettant le rayonnement à longueur d'ondes dans la plage invisible, du dispositif émetteur (1-6) lorsque le rayonnement visible fait défaut, est prévu.

2. Dispositif selon la revendication 1, **caractérisé en ce que**, pour la séparation des deux parties de longueur d'ondes est prévu un diviseur de rayons (12 ; 16), en particulier, un prisme diviseur (12), et **en ce que**, en particulier, au moins en amont d'un récepteur (15, 40) est branché un écran anti-réfléchissant (13) disposé hors du plan image du récepteur (15, 40), écran anti-réfléchissant dimensionné, de préférence, de manière correspondante à la section transversale de la surface d'entrée du récepteur.

3. Dispositif selon la revendication 1 ou 2, **caractérisé en ce que** l'objectif est réalisé de manière que le faisceau de rayons laser présentant une distribution d'intensité gaussienne est vigneté et est taillé pour une valeur d'intensité pour le premier anneau de diffraction de <0,15 fois, de préférence <0,12 fois, en particulier <0,09 fois, l'intensité maximale.

4. Dispositif selon l'une des revendications 1 à 3, **caractérisé en ce que**, en amont du récepteur (15, 40), est installé un filtre optique (38), transmettant uniquement la partie de longueur d'onde invisible, mais bloquant par contre le rayonnement visible.

5. Dispositif selon l'une des revendications 1 à 4, **caractérisé en ce que** le dispositif émetteur (1-6) et le récepteur (15, 40) présentent une optique commune coaxiale.

6. Dispositif selon la revendication 4, **caractérisé en ce qu'**il est réalisé sous la forme de tachymètre avec un objectif de lunette (18), en particulier, le trajet des rayons du tachymètre, dans lequel le rayon d'émission du dispositif émetteur (1-6) peut être introduit, est le trajet des rayons de l'objectif de lunette (18).

7. Dispositif selon l'une des revendications 1 à 6, **caractérisé en ce que** le dispositif émetteur (1-6) présente un convertisseur de fréquence optique, branché en aval du micro-laser (3), en particulier un doubleur de fréquence optique (6).

8. Dispositif selon l'une des revendications 1 à 7, **caractérisé en ce que**, pour effectuer le découplage du faisceau de rayons de mesure réfléchi par un objet vis-à-vis du récepteur (15, 40), une plaque plane (16) est branchée en amont du récepteur (15, 40), dans le trajet de rayon convergent de l'objectif (18).

9. Dispositif selon la revendication 8, **caractérisé en ce que** la plaque plane (16) présente une épaisseur <0,3 mm, de préférence <0,2 mm, la plaque plane (16) étant réalisée en particulier pour être partiellement argentée et étant susceptible d'être déplacée, en particulier susceptible d'être pivotée, d'une position de repos, à l'extérieur du trajet des rayons de l'objectif (18), en une position de travail, à l'intérieur du trajet des rayons.

10. Dispositif pour la mesure optique de distance ou de vitesse selon le principe de mesure d'impulsions, ou dispositif de nivellement selon l'une des revendication 6 à 9, **caractérisé en ce qu'**un dispositif d'ajustement pour ajuster l'axe du faisceau de rayons d'émission et sa position relative par rapport à l'axe de la lunette, en particulier réalisé sous la forme d'une plaque plane (9) inclinable, dans le trajet de rayon divergent, est associé à l'objectif (18).

11. Dispositif selon l'une des revendications 1 à 10, **caractérisé en ce qu'**un objectif de compensation (11), pour la compensation de l'écart de longueur chromatique ou de l'aberration de l'objectif (18), est associé à cet objectif (18) dans le trajet des rayons d'émission (A).

12. Dispositif selon l'une des revendications 1 à 11, **caractérisé en ce qu'**un compensateur de température, de préférence réalisé sous la forme d'une lentille (8) déplaçable en fonction de la température, est associé à l'objectif (18), dans le trajet des rayons d'émission (A).

13. Dispositif selon l'une des revendications 1 à 12, **caractérisé en ce qu'**une plaque plane (10) pouvant être mise en service à volonté, pour élargir le faisceau de rayons, est associée à l'objectif (18) dans le trajet des rayons d'émission.

14. Dispositif selon l'une des revendications 1 à 13, **caractérisé en ce qu'**un dispositif de commutation pour la fourniture séquentielle de la longueur d'onde différente est prévu, réalisé le cas échéant sous la forme d'une plaque plane (10) pouvant être mise en service à volonté.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **N. MERMILLIOD et al.** *Applied Physics Letters,* 1991, vol. 59 (27), 3519